# FASCICULE DE BREVET EUROPEEN

(11) **EP 1 523 832 B1**
(45) Date de publication et mention de la délivrance du brevet: **19.02.2014**
(21) Numéro de dépôt: 03750806.6
(22) Date de dépôt: 11.07.2003
(51) Int. Cl.: H04L 12/28

(54) **Procédé pour connexion à un système électronique par l'intermédiaire d'un fournisseur d'accès à un réseau de communication**
Verfahren zur Verbindung mit einem elektronischen System mittels eines Kommunikationsnetzwerkzugangsproviders
Method for connecting to an electronic system via a communication network access provider

(30) Priorité: 12.07.2002 FR 0208840
(43) Date de publication de la demande: 20.04.2005
(73) Titulaire: Webdyn, 78100 Saint-Germain-en-Laye (FR)
(72) Inventeur: FAUGERAS, Philippe, F-92100 Boulogne-Billancourt (FR)
(74) Mandataire: Michelet, Alain
(86) Numéro de dépôt international: PCT/FR2003/002222
(87) Numéro de publication internationale: WO 2004/008691

(56) Documents cités:
- WO-A-01/44889
- WO-A-02/19627
- WO-A-98/37665
- WO-A-99/35805
- FR-A- 2 785 122

## Description

La présente invention concerne un procédé pour connexion à un système électronique par l'intermédiaire d'un fournisseur d'accès à un réseau de communication ainsi qu'un dispositif pour la mise en oeuvre du procédé. Elle a des applications dans le domaine de la télémaintenance ou du contrôle à distance d'équipements électroniques pouvant communiquer.

Des passerelles de communication pour réseau de type INTERNET sont connues. On peut par exemple citer le système qui est mis en oeuvre dans la demande de brevet FR98/13454 du même inventeur et intitulée « procédé et dispositif de pilotage à distance d'un automate et carte prévue à cet effet », système qui est un serveur de communication et qui, comme on le verra, peut être utilisée dans la présente invention.

Cette connectivité INTERNET est assurée par des dispositifs qui sont des « boîtes IP » qui s'interfacent entre un ou plusieurs équipements électroniques, par exemple ceux d'un bâtiment privé ou public, industriel ou non, et le monde Internet (TCP/IP). Ces équipements électroniques sont par exemple, un/des micro-ordinateurs, des automates industriels, ou autres. Les « boîtes IP» ou passerelles, agissent comme un lien de communication pour des données générées dans les équipements électroniques et une (ou plusieurs) plate-forme informatique d'administration distincte qui exploite les données reçues des équipements. Inversement, la plate-forme informatique peut transmettre des données à/aux équipements électroniques par l'intermédiaire de telles passerelles. Il est ainsi possible avec une telle architecture de pouvoir gérer à distance un/des équipements électroniques à l'aide d'outils informatiques standards dont les navigateurs INTERNET et/ou des messageries électroniques et avec des protocoles (TCP/IP, HTTP, FTP, SMTP, SNMP) standards et pérennes. Les services ainsi obtenus concernent la télé maintenance, le télé contrôle, la télé surveillance ...

Un autres avantage de INTERNET est de pouvoir utiliser le réseau mondial (la « toile » ou WEB) comme infrastructure de communication. Par exemple la télé maintenance d'un équipement situé en Chine peut être réalisée à partir d'une station située en France et, cela, pour le prix d'une communication locale.

Pour que la plate-forme d'administration et la passerelle puissent communiquer entre-elles par le réseau INTERNET il est nécessaire qu'au moins une des deux dispose d'une adresse INTERNET, dite adresse IP, afin que l'autre puisse la joindre. Par exemple, il est nécessaire que la passerelle dispose d'une adresse IP officielle et que le lien entre la passerelle et le réseau Internet soit permanent, que ce soit directement, la passerelle est directement sur le réseau ou, indirectement, par l'intermédiaire d'un fournisseur d'accès INTERNET (FAI). Ce type d'architecture peut être réalisé à travers un lien ADSL, sur une liaison spécialisée ou sur le câble, toutefois, le coût en est encore relativement important. Sur un lien téléphonique en réseau commuté, point à point, encore dénommé RTC, il est par contre impossible de conserver un lien permanent à moindre coût. Le coût de ces solutions est encore plus élevé si l'on considère le temps réel d'utilisation du lien et, en particulier, pour les applications de maintenance, télé-contrôle ou autres qui ne nécessitent pas un transfert continu de données.

Dans le cas d'une architecture RTC, la connexion Internet à partir du réseau RTC se fait à l'aide d'un modem et à l'initiative du client. Le client, dans le cas présent, le système électronique, dispose d'un abonnement auprès d'un Fournisseur d'accès Internet ou FAI. A partir des coordonnées du FAI (N° Tel) et des droits d'usage du système (vérifiés par exemple avec un « Login » - nom utilisateur - et un mot de passe), le client établit une connexion avec le FAI. et reçoit une adresse IP officielle avec laquelle des tiers pourront le joindre pour échanger des données et messages.

Ainsi, lorsqu'un administrateur désire joindre un système électronique distant, ledit système doit être déjà connecté sur INTERNET et l'administrateur doit avoir eu connaissance de son adresse IP. L'administrateur pouvant avoir à rentrer en contact avec le système électronique d'une manière aléatoire dans le temps et en temps réel, il est donc nécessaire que ledit système électronique soit connecté en permanence pour être joignable en permanence sur le réseau. Il s'ensuit un coût de communication très important et le blocage d'une ligne de communication dont le taux d'utilisation réel peut être extrêmement faible.

La présente invention propose de réduire ces contraintes par un procédé dans lequel la ligne de communication n'est, en pratique, prise et utilisée que pour chaque communication entre l'administrateur et le système électronique client à travers un réseau de communication. Dans un mode préféré le réseau est INTERNET.

On connaît par ailleurs avec WO99/35805 un système de distribution d'informations à distance à ligne pseudo-dédiée. Dans ce document, deux entités, un dispositif hôte et un client, peuvent communiquer après que l'hôte ait informé le client de la nécessité d'une communication et le client ait rappelé l'hôte.

L'invention concerne donc un procédé pour connexion d'un administrateur à un système électronique client par l'intermédiaire d'un fournisseur d'accès à un réseau de communication.

Plus précisement, l'objet de l'invention est défini par la revendication 1 pour le procédé et la revendication 9 pour l'interface de communication téléphonique. Dans divers modes de mise en oeuvre de l'invention, les moyens suivants pouvant être combinés selon toutes les possibilités techniquement possibles sont employés :
- on met en oeuvre un réseau INTERNET,
- on met en oeuvre un réseau INTRANET,
- l'équipement électronique peut générer au moins une alarme et lorsqu'une alarme est générée, l'interface de communication téléphonique initialise (phase d'initialisation) et se signale (phase de signalisation) pour une communication, lors de phase de signalisation l'interface de communication téléphonique transmettant en outre à l'administrateur des informations sur l'alarme, la coordonnée administrateur étant prédéterminée dans l'interface de communication téléphonique,
- lors de la phase d'appel, l'identité de l'administrateur est obtenue par le client avec une fonction « présentation du numéro » de l'appelant en relation avec la sonnerie, le client ne décrochant pas et ne prenant pas la ligne,
- lorsque la fonction « présentation du numéro » n'est pas disponible, lors de l'appel, l'identité de l'administrateur est obtenue par le client grâce à l'émission d'un code d'identification sur la ligne par l'administrateur, le client décrochant et prenant la ligne pour réception du code d'identification puis raccrochant,
- l'interface de communication téléphonique met en oeuvre un compteur (ou décompteur) de temps qui est activé à la phase de signalisation et lorsque la phase de communication n'est pas entamée après le comptage (ou décomptage) d'un temps prédéterminé d'attente de communication, l'interface de communication téléphonique se déconnecte du point d'accès client,
- l'adresse d'accès client n'est en outre valable que pendant un temps déterminé de validité, le point d'accès client et l'adresse d'accès client étant supprimés chez le fournisseur d'accès à l'expiration dudit temps de validité,
- la coordonnée administrateur est fonction de la voie utilisée par l'interface de communication téléphonique pour transmettre à l'administrateur l'adresse d'accès client, et la voie est le réseau, la coordonnée administrateur est une coordonnée réseau administrateur, la transmission de l'adresse d'accès client s'effectuant par l'envoi d'un message électronique sur le réseau.

Ainsi, en utilisant les technologies INTERNET, (TCP/IP et autres outils basés sur le « Web ») de nouvelles perspectives s'offrent à de nombreux équipementiers industriels ou d'autres appareillages pour le public grâce à une réduction des coûts de communication et la libération de lignes de communications diminuant ainsi l'engorgement des réseaux. De plus, à travers une connexion INTERNET, il est possible de gérer un équipement quelconque à l'aide d'outils et de protocoles standards ce qui réduit encore les coûts et facilite la diffusion du procédé et des systèmes mis en oeuvre car il n'y a pas besoin de reformer des techniciens et des utilisateurs à des techniques nouvelles. Dans cette invention, INTERNET est mentionné préférentiellement car c'est un moyen qui est largement utilisé et qui est normalisé. Le principe de base de l'invention peut toutefois être mis en oeuvre avec d'autres technologies.

La présente invention va maintenant être exemplifiée par la description qui suit d'un exemple préféré de mise en oeuvre et avec des déclinaisons, sans pour autant en être limitée, et en relation avec les Figures suivantes :
la Figure 1 représentant la mise en oeuvre schématique de l'invention dans le cas d'une activation de la passerelle client par l'administrateur ou par une alarme,
la Figure 2 représentant une passerelle dans ses relations fonctionnelles,
la Figure 3 représentant des blocs logiciels et de données permettant le fonctionnement d'une passerelle,
la Figure 4 représentant schématiquement l'organisation structurelle de l'invention.

Afin de mieux aborder les Figures, on détaille maintenant les moyens généraux de l'invention en commençant par l'interface de communication téléphonique du client qui comporte donc un modem et une passerelle client. A travers son lien avec le modem la passerelle client peut détecter si un appel entrant est en cours par une fonction de détection de sonnerie. Dans un mode évolué, le client dispose d'un abonnement RTC avec présentation du numéro de l'appelant et la passerelle sait donc qu'il y a un appel entrant et, en plus, sait qui appelle. Dans un mode moins évolué, la reconnaissance de l'appelant peut s'effectuer par la mise en oeuvre d'un code d'appel, par exemple basé sur un nombre de sonneries par appel et/ou un nombre de répétition d'appels pendant un temps donné afin d'éviter à avoir à décrocher pour le client. Enfin, il est également possible que le client détermine l'identité de l'appelant en décrochant et en écoutant des informations transmises sur la ligne par l'appelant, la transmission pouvant se faire par exemple par fréquences vocales ou par modulation classique de données, et, une fois ladite transmission de l'identification effectuée, le client raccroche.

La passerelle client dispose d'une base de données comprenant les numéros (ou identités) d'administrateurs autorisés à la « bipper » et, dans le cas de l'utilisation de la messagerie électronique, de l'adresse de messagerie correspondante. Lorsqu'un appel entrant est en cours, la passerelle client récupère le numéro de l'appelant et le compare aux numéros présents dans sa base de données. Si le résultat de la comparaison est positif le « bip » est validé et la passerelle client peut initier une connexion vers le FAI.

Ainsi, dans un exemple de mise en oeuvre évolué, le principe est de « bipper » la passerelle client par liaison RTC lorsque l'on désire se connecter au client et à son équipement électronique. Sur réception du « bip », en pratique la présentation du numéro et/ou les sonneries, la passerelle sait que l'on cherche à la joindre mais ne décroche pas. Le train de sonneries étant fini la passerelle se connecte à un fournisseur d'accès INTERNET (FAI) qui, après vérification de critères de sécurité, crée un point d'accès client et une adresse d'accès client, le client récupérant l'adresse d'accès client IP (protocole INTERNET, « INTERNET PROTOCOL »). Une fois en possession de cette adresse d'accès client IP valide, la passerelle du client conserve la connexion au FAI et envoie un message électronique à l'administrateur avec, dans le corps du message, son adresse d'accès client IP. L'adresse peut être disposée dans d'autres champs du message et, par exemple le titre. Les moyens informatiques de l'administrateur peuvent être configurés pour extraire automatiquement l'adresse d'accès client et entamer automatiquement une communication avec le client.

Grâce à ce principe, l'administrateur dispose donc de l'adresse d'accès client et peut communiquer à travers Internet avec le client en utilisant ladite adresse, la passerelle client distante étant toujours connectée sur le point d'accès du FAI.

L'envoi d'un message électronique étant non déterministe, on ne sait jamais à l'avance quel est le délai pour qu'il soit reçu par l'administrateur et traité. Il est donc souhaitable d'éviter une attente de connexion trop longue et des coûts de communications trop importants pour la passerelle client. A cette fin, une fois le message électronique (ou autre moyen de transmettre l'adresse d'accès client à l'administrateur) envoyé, la passerelle client initialise un compteur (« timer »). Si au bout d'un certain temps l'administrateur n'est pas connecté au client, le modem raccroche et le lien avec le FAI est fermé. De son coté, le FAI supprime le point d'accès client et l'adresse d'accès correspondants.

Une alternative de mise en oeuvre de l'invention concerne la gestion des alarmes issues de l'équipement électronique, le terme alarme couvrant aussi bien des alarmes proprement dites que des états divers devant être remontés vers l'administrateur. Dans cette gestion d'alarmes, lorsque la passerelle client détecte que l'équipement électronique est en alarme, cette dernière est remontée vers l'administrateur dans le message électronique servant à transmettre l'adresse d'accès client à l'administrateur. Comme précédemment, les moyens informatiques de l'administrateur peuvent récupérer automatiquement l'adresse d'accès client et l'alarme et, éventuellement agir en conséquence après s'être connectés au client par INTERNET. Ainsi, à la réception du message électronique, l'administrateur est informé de l'alarme et il peut, en plus, se connecter en temps réel sur l'équipement électronique pour traiter le problème.

Selon l'invention, la passerelle client peut être activée aussi bien, à distance, à la demande d'un administrateur que localement, suite à une alarme générée par l'équipement électronique auquel il est connecté.

Comme décrit dans les exemples préférés, le client se connecte au réseau par une ligne de type téléphonique, RTC, point à point. Il est cependant possible que le client utilise une ligne spécialisée pour la connexion réseau qui permet la communication INTERNET entre l'administrateur et le client. Dans ce dernier cas, une ligne de type téléphonique est toutefois mise en oeuvre pour l'appel afin d'activer la passerelle client. Eventuellement, la même ligne peut également servir à la transmission de l'adresse d'accès client en retour selon les modalités précédemment décrites (fréquence vocale, voix synthétisée...).

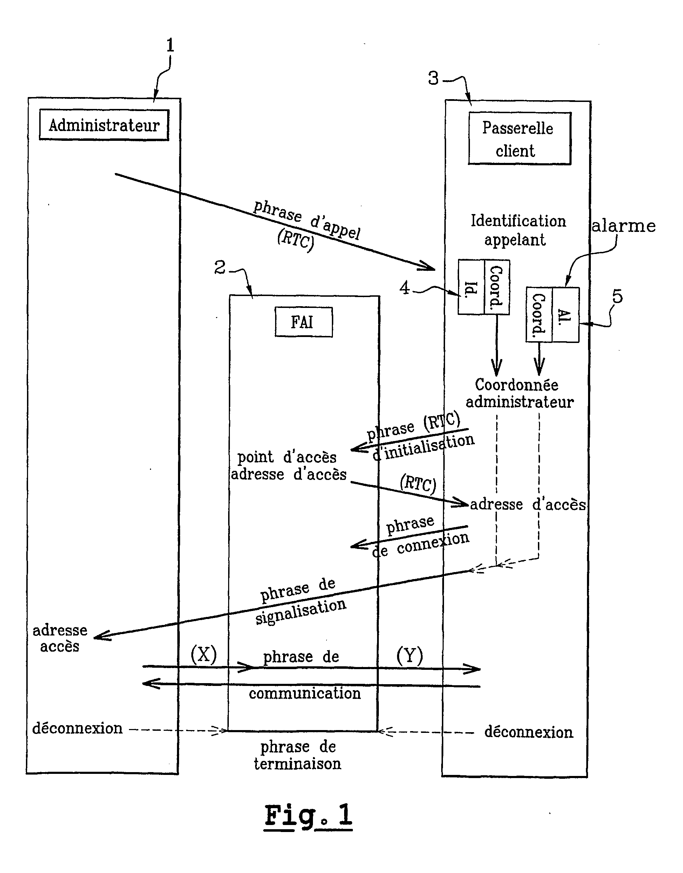

Sur la Figure 1 on a représenté schématiquement les relations fonctionnelles entre un administrateur 1, un fournisseur d'accès INTERNET 2 (FAI) et une passerelle client 3.

Dans le cas de l'activation de la passerelle client 3 par l'administrateur 1, ce dernier « bipe » par appel téléphonique RTC la passerelle qui identifie l'appelant selon l'une des modalités précédemment décrites et, de préférence, par l'utilisation d'une fonction « présentation du numéro » de l'appelant afin d'avoir à éviter de décrocher et de prendre la ligne. La passerelle client 3 possède de préférence une table 4 de correspondance entre l'identité des appelants (Id.) et les coordonnées des appelants (Coord.) permettant de renvoyer vers l'appelant des informations, dont en particulier l'adresse d'accès client. On comprend bien que les données de la table dépendent, d'une part, de la façon dont l'identification de l'appelant se fait (numéro de téléphone, code d'appel, fréquence vocale, données autres) et, d'autre part, de la manière dont l'appelant va recevoir en retour (messagerie INTERNET) les informations dont l'adresse d'accès client. Pour ce dernier point, de préférence, les coordonnées correspondent à des adresses de courrier électronique. Un contrôle de sécurité peut également être effectué pour vérifier que l'identité de l'appelant est valide/autorisée. A la fin de la phase d'appel la ligne RTC de la passerelle client est libre.

Dans le cas de l'activation de la passerelle client 3 par une alarme, les étapes précédentes sont omises et, de préférence une coordonnée par défaut est utilisée pour informer l'administrateur. On a cependant représenté une table alarme (AI.) versus coordonnée (Coord.) sur la Figure 1 ce qui correspond au cas où des coordonnées différentes en fonction de l'alarme sont utilisées.

Dans les deux cas précédents, la passerelle client 3 dispose alors d'une coordonnée administrateur. L'étape suivante est alors la phase d'initialisation pendant laquelle la passerelle contacte le FAI 2 pour obtenir un point d'accès client et une adresse d'accès client qui lui est renvoyée. A l'étape suivante, la passerelle client se connecte sur le FAI 2 sur le point d'accès client, ce qui la rend « visible » et accessible sur le réseau de communication. L'administrateur 1 est informé de l'adresse d'accès client au cours de la phase de signalisation.

On comprend bien qu'après la phase d'initialisation au cours de laquelle un point d'accès client avec son adresse d'accès client sont générés, il faut que la phase de signalisation aboutisse à ce que l'administrateur soit informé de ladite adresse d'accès client, quelles que soient les modalités de cette information, que ladite adresse soit renvoyée ou non à la passerelle client et/ou que ce soit le FAI 2 qui informe directement l'administrateur (la passerelle client informant alors le FAI 2 de la coordonnée administrateur pour cela). De préférence, c'est la passerelle client qui informe l'administrateur par messagerie électronique une fois la phase de connexion achevée.

L'administrateur 1 ayant l'adresse d'accès client, il peut alors par le réseau de communication et avec des outils classiques de navigation et de programmation communiquer avec le système électronique client par l'intermédiaire du FAI 2 au cours de la phase de communication. Une fois la communication terminée, l'administrateur et la passerelle client se déconnectent, la déconnexion de l'un ou de l'autre entraînant la suppression du point d'accès client et de son adresse correspondante à la phase de terminaison. Pour communiquer, l'administrateur peut utiliser une ligne spécialisée de transmission (RNIS...) ou une ligne RTC.

Le système électronique client comporte un équipement électronique relié à une interface de communication téléphonique, l'interface de communication téléphonique comportant une passerelle client et un modem. De préférence, le client est relié au réseau téléphonique RTC, qu'il soit filaire et/ou radio. La passerelle client est un dispositif de gestion de communication permettant l'interfaçage matériel et logiciel entre des équipements électroniques (capteurs : caméra, microphone, température... ; appareils informatiques : micro-processeur, micro-ordinateurs... ; un réseau local, etc.) et le réseau de communication, de préférence régi par un protocole TCP/IP. La passerelle peut également s'interfacer à des effecteurs (afficheurs, générateurs/restitution de sons, machines outils...). Cette passerelle client est un serveur de communication normalisé TCP/IP et également HTTP, FTP et, pour pouvoir échanger des messages électroniques SMTP. Le serveur comporte un logiciel applicatif permettant au moins le fonctionnement selon l'invention et des entrées sorties. Le serveur permet également, pendant la phase de communication, des échanges de données, des actions logicielles (par exemple comme permit par la transmission de données en format HTML). La passerelle permet ainsi, en phase de communication, aussi bien de remonter des informations du client vers l'administrateur, qu'inversement à l'administrateur de transmettre des informations vers le client. Ces informations, par exemple pour maintenance, peuvent être des données pour mise à jour de fichiers locaux, aussi bien de la passerelle elle-même que les équipements électroniques. De préférence, le modem est un organe connecté à la passerelle, mais il peut éventuellement être intégré à la passerelle client.

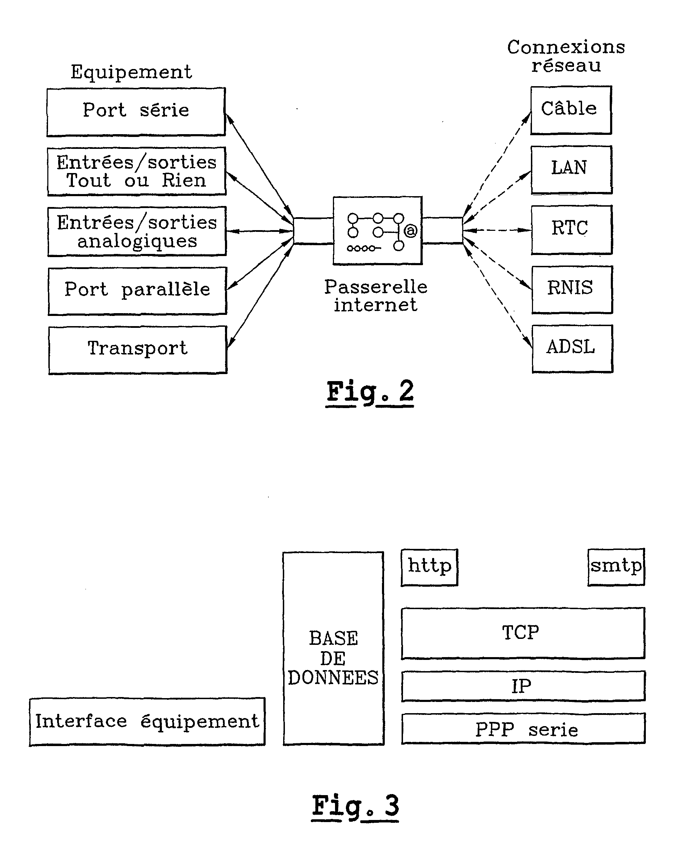

La Figure 2 représente donc une passerelle dans ses relations fonctionnelles. Une Passerelle Internet est une simple carte électronique de dimensions réduites qui est placée en frontal de l'équipement que l'on veut gérer, entre l'équipement et le réseau. Côté équipement(s), les échanges de données peuvent utiliser différents supports dont port série type RS232, E/S tout ou rien (numérique), E/S analogique... Côté réseau, les liens possibles sont notamment le câble, un réseau local (LAN), RTC, ADSL, RNIS... L'objet de cette invention ne concerne préférentiellement que des liens non permanents, c'est à dire des liens du type RTC ou RNIS.

La Figure 3 représente donc des blocs logiciels et de données permettant le fonctionnement d'une passerelle. Au niveau logiciel une passerelle INTERNET comprend un ensemble de blocs ou modules qui s'articulent autour d'une base de données centrale. La base de données (DATA BASE sur la Figure 3) comprend l'ensemble des variables représentant l'état de l'équipement. Cette base de données est alimentée en permanence par l'interface équipement. Côté réseau une passerelle comprend l'ensemble des protocoles permettant d'établir un lien IP plus un ensemble de services IP qui permettent de mettre en place une application de télégestion. Les valeurs d'usage génériques liées à une application de télégestion sont au nombre de quatre :
Collecte de données issues de l'équipement,
Envoie de données vers l'équipement,
Déclenchement de processus,
Remontée d'alarmes.

Le service HTTP permet de faire une présentation du type WEB des données échangées entre la base de données et un administrateur distant. Le service SMTP permet, en cas d'alarme, de générer un message électronique (« email ») vers un serveur SMTP. La couche PPP permet d'initier ou de recevoir un appel téléphonique à travers un modem. Les services présentés dans cette figure 3 ne sont pas exhaustifs et d'autres services IP comme SNMP, WAP, FTP peuvent également être utilisés dans le cadre de l'invention.

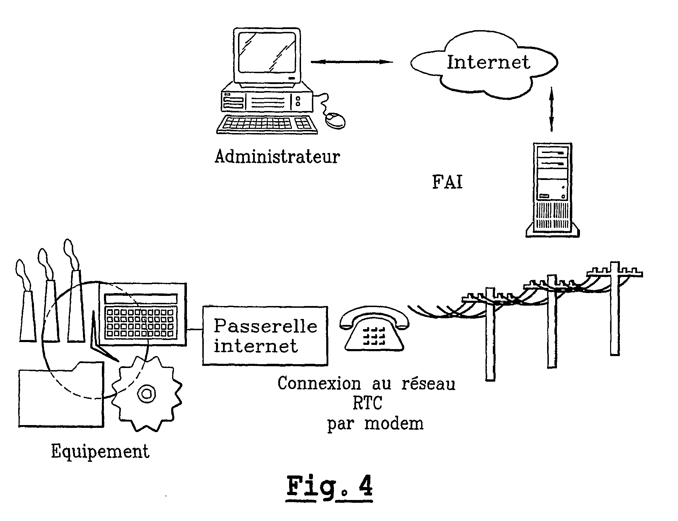

La Figure 4 représente donc schématiquement l'organisation structurelle de l'invention. Le client dispose d'un abonnement Internet avec un FAI à travers un lien RTC. La passerelle Internet dispose d'un modern pour se connecter au FAI. La passerelle connaît les paramètres pour se connecter au FAI (No de téléphone du FAI, nom d'utilisateur, mot de passe). La passerelle connaît les coordonnées de l'administrateur, soit qu'elle les ait reçues de l'administrateur lors d'une phase d'appel par l'intermédiaire de la fonction de « présentation du numéro », soit que lesdites coordonnées aient été préprogrammées dans la passerelle (*ab initio*, lors de la fabrication, ou, ultérieurement, par exemple par une opération de maintenance). Ce dernier cas correspond au fonctionnement sur alarme dans lequel la passerelle doit utiliser des coordonnées administrateur par défaut. Dans le cas d'une transmission de l'adresse IP par messagerie, la coordonnée est une adresse électronique de l'administrateur. Par défaut, la passerelle et le modem sont configurés en mode écoute (attente appel extérieur ou « dial In »). Si la passerelle détecte un « bip » (sonnerie et/ou « présentation de numéro ») le modem et la passerelle basculent en mode appel après récupération de l'identité de l'appelant (envol d'un appel ou « dial out ») puis le modem compose le No de téléphone du FAI fourni par la passerelle. Une session PPP est établie entre la passerelle et le FAI après vérification du mot de passe et du nom utilisateur fournis par la passerelle. Le FAI envoie une adresse IP à la passerelle et la passerelle est connectée à INTERNET. La passerelle génère un message électronique vers les coordonnées (adresse de messagerie électronique) de l'administrateur enregistrées dans la base de données (table de conversion identité appelant et coordonnées administrateur ou table de conversion alarme et coordonnées administrateur). Le texte du message électronique contient l'adresse IP fournie par le FAI. A la réception du message l'administrateur peut se connecter sur la passerelle grâce à l'adresse IP contenue dans le message électronique.

## Revendications

1. Procédé pour connexion sur un réseau de communication d'un administrateur (1) à un système électronique client,
- le système électronique client comportant un équipement électronique relié à une interface de communication téléphonique, l'interface de communication téléphonique du client comportant une passerelle client (3) et un modem,
- l'administrateur (1) ayant un moyen informatique avec interface de communication réseau avec un système de messagerie lui permettant de recevoir des messages électroniques, l'administrateur (1) ayant une coordonnée administrateur,
dans lequel la connexion est effectuée par l'intermédiaire d'un fournisseur d'accès (2) au réseau de communication, le fournisseur d'accès (2) pouvant générer un point d'accès au réseau avec une adresse d'accès correspondante, ledit point d'accès permettant au client et à l'administrateur (1) de communiquer entre eux, l'administrateur possédant en outre un moyen d'appel téléphonique du client, l'interface de communication téléphonique du client possédant un moyen l'informant de l'identité de l'appelant téléphonique afin que lors d'un appel téléphonique par l'administrateur (1) le client soit informé de l'identité de l'administrateur (1), le client déterminant la coordonnée administrateur en fonction de l'identité de l'administrateur reçue, ladite coordonnée administrateur permettant à l'interface de communication téléphonique du client de transmettre lors d'une phase de signalisation l'adresse d'accès client à l'administrateur (1) l'ayant appelé,
et dans lequel chaque communication entre l'administrateur (1) et le client :
- dans une phase d'appel, l'administrateur (1) appelle le client, l'interface de communication téléphonique du client étant informée de l'identité de l'administrateur (1) et déterminant la coordonnée administrateur,
- dans une phase d'initialisation, l'interface de communication téléphonique du client se connecte au fournisseur d'accès (2) pour obtenir un point d'accès client et une adresse d'accès client,
- dans une phase de connexion client, le client se connecte au point d'accès client et devient ainsi accessible sur le réseau à l'adresse d'accès client,
- dans la phase de signalisation, l'interface de communication téléphonique du client transmet à l'administrateur (1) l'adresse d'accès client,
- dans une phase de communication, l'administrateur (1) se connecte par le réseau à l'adresse d'accès client pour communiquer avec le client,
- dans une phase de terminaison, l'interface de communication téléphonique et l'administrateur (1) se déconnectent du point d'accès client et ledit point d'accès client et l'adresse d'accès client correspondante sont supprimés chez le fournisseur d'accès (2), l'adresse d'accès client générée par le fournisseur d'accès (2) n'étant valable que pour une seule communication et étant différente à chaque génération.

2. Procédé selon la revendication 1, **caractérisé en ce que** l'équipement électronique peut générer au moins une alarme et lorsqu'une alarme est générée, l'interface de communication téléphonique initialise et se signale pour une communication, lors de phase de signalisation l'interface de communication téléphonique transmettant en outre à l'administrateur (1) des informations sur l'alarme, la coordonnée administrateur étant prédéterminée dans l'interface de communication téléphonique.

3. Procédé selon la revendication 1 ou 2, **caractérisé en ce que** lors de la phase d'appel, l'identité de l'administrateur (1) est obtenue par le client avec une fonction « présentation du numéro » de l'appelant en relation avec la sonnerie, le client ne décrochant pas et ne prenant pas la ligne.

4. Procédé selon la revendication 3, **caractérisé en ce que** lorsque la fonction « présentation du numéro » n'est pas disponible, lors de l'appel, l'identité de l'administrateur (1) est obtenue par le client grâce à l'émission d'un code d'identification sur la ligne par l'administrateur (1), le client décrochant et prenant la ligne pour réception du code d'identification puis raccrochant.

5. Procédé selon l'une quelconque des revendications précédentes, **caractérisé en ce que** l'interface de communication téléphonique met en oeuvre un compteur (ou décompteur) de temps qui est activé à la phase de signalisation et lorsque la phase de communication n'est pas entamée après le comptage (ou décomptage) d'un temps prédéterminé d'attente de communication, l'interface de communication téléphonique se déconnecte du point d'accès client.

6. Procédé selon l'une quelconque des revendications précédentes, **caractérisé en ce que** l'adresse d'accès client n'est en outre valable que pendant un temps déterminé de validité, le point d'accès client et l'adresse d'accès client étant supprimés chez le fournisseur d'accès (2) à l'expiration dudit temps de validité.

7. Procédé selon l'une quelconque des revendications précédentes, **caractérisé en ce que** le point d'accès client et l'adresse d'accès client sont supprimés chez le fournisseur d'accès (2) lorsque soit le client, soit l'administrateur (1) se déconnecte après avoir été connecté audit point d'accès.

8. Procédé selon l'une quelconque des revendications précédentes, **caractérisé en ce que** la coordonnée administrateur est fonction de la voie utilisée par l'interface de communication téléphonique pour transmettre à l'administrateur (1) l'adresse d'accès client, et **en ce que** la voie est le réseau, la coordonnée administrateur est une coordonnée réseau administrateur, la transmission de l'adresse d'accès client s'effectuant par l'envoi d'un message électronique sur le réseau.

9. Interface de communication téléphonique client pour connexion sur un réseau de communication d'un administrateur (1) à un système électronique client,
- le système électronique client comportant un équipement électronique relié à l'interface de communication téléphonique client, l'interface de communication téléphonique client comportant une passerelle client (3) et un modem,
- l'administrateur (1) ayant un moyen informatique avec interface de communication réseau et une coordonnée administrateur avec un système de messagerie lui permettant de recevoir des messages électroniques,
l'interface de communication téléphonique client comportant des moyens permettant que la connexion soit effectuée par l'intermédiaire d'un fournisseur d'accès (2) au réseau de communication, le fournisseur d'accès (2) pouvant générer un point d'accès au réseau avec une adresse d'accès correspondante, ledit point d'accès permettant au client et à l'administrateur (1) de communiquer entre eux, l'administrateur (1) possédant en outre un moyen d'appel téléphonique du client, l'interface de communication téléphonique client possédant un moyen informant le client de l'identité de l'appelant téléphonique afin que lors d'un appel téléphonique par l'administrateur (1) le client soit informé de l'identité de l'administrateur (1), le client déterminant la coordonnée administrateur en fonction de l'identité de l'administrateur reçue, ladite coordonnée administrateur permettant à l'interface de communication téléphonique client de transmettre lors d'une phase de signalisation l'adresse d'accès client à l'administrateur (1) l'ayant appelé,
et la passerelle client (3) de l'interface de communication téléphonique client étant un serveur de communication avec un programme de fonctionnement permettant que, pour chaque communication entre l'administrateur (1) et le client:
- dans une phase d'appel, l'administrateur (1) appelle le client, l'interface de communication téléphonique client étant informée de l'identité de l'administrateur (1) et déterminant la coordonnée administrateur,
- dans une phase d'initialisation, l'interface de communication téléphonique client se connecte au fournisseur d'accès (2) pour obtenir un point d'accès client et une adresse d'accès client,
- dans une phase de connexion client, le client se connecte au point d'accès client et devient ainsi accessible sur le réseau à l'adresse d'accès client,
- dans la phase de signalisation, l'interface de communication téléphonique client transmet à l'administrateur (1) l'adresse d'accès client,
- dans une phase de communication, l'administrateur (1) se connecte par le réseau à l'adresse d'accès client pour communiquer avec le client,
- dans une phase de terminaison, l'interface de communication téléphonique client et l'administrateur (1) se déconnectent du point d'accès client et ledit point d'accès client et l'adresse d'accès client correspondante sont supprimés chez le fournisseur d'accès (2), l'adresse d'accès client générée par le fournisseur d'accès (2) n'étant valable que pour une seule communication et étant différente à chaque génération.

## Patentansprüche

1. Verfahren zur Verbindung eines Administrators (1) mit einem Kundenelektroniksystem in einem Kommunikationsnetzwerk,
- wobei das Kundenelektroniksystem eine Elektronikausrüstung umfasst, die mit einer Telefonkommunikationsschnittstelle verbunden ist, wobei die Telefonkommunikationsschnittstelle des Kunden ein Kundengateway (3) und ein Modem umfasst,
- wobei der Administrator (1) ein Informatikmittel mit einer Netzwerkkommunikationsschnittstelle mit einem Nachrichtensystem besitzt, das es ihm ermöglicht, elektronische Nachrichten zu erhalten, wobei der Administrator (1) eine Administratorkoordinate besitzt,
bei dem die Verbindung mit Hilfe eines Zugangsproviders (2) zu dem Kommunikationsnetzwerk erfolgt, wobei der Zugangsprovider (2) einen Zugangspunkt zum Netzwerk mit einer entsprechenden Zugangsadresse erstellen kann, wobei es der Zugangspunkt dem Kunden und dem Administrator (1) ermöglicht, miteinander zu kommunizieren, wobei der Administrator ferner ein telefonisches Anrufmittel des Kunden besitzt, wobei die Telefonkommunikationsschnittstelle des Kunden ein Mittel besitzt, das ihn über die Identität des Telefonanrufers informiert, damit bei einem Telefonanruf durch den Administrator (1) der Kunde über die Identität des Administrators (1) informiert wird, wobei der Kunde die Administratorkoordinate in Abhängigkeit von der empfangenen Identität des Administrators bestimmt, wobei es die Administratorkoordinate der Telefonkommunikationsschnittstelle des Kunden ermöglicht, während einer Anzeigephase die Kundenzugangsadresse an den Administrator (1), der ihn angerufen hat, zu übermitteln,
und bei dem jede Kommunikation zwischen dem Administrator (1) und dem Kunden:
- in einer Anrufphase der Administrator (1) den Kunden anruft, wobei die Telefonkommunikationsschnittstelle des Kunden über die Identität des Administrators (1) informiert wird und die Administratorkoordinate bestimmt,
- in einer Initialisierungsphase sich die Telefonkommunikationsschnittstelle des Kunden mit dem Zugangsprovider (2) verbindet, um einen Kundenzugangspunkt und eine Kundenzugangsadresse zu erhalten,
- in einer Kundenanschlussphase sich der Kunde mit dem Kundenzugangspunkt verbindet und somit in dem Netzwerk an der Kundenzugangsadresse zugänglich wird,
- in der Anzeigephase die Telefonkommunikationsschnittstelle des Kunden an den Administrator (1) die Kundenzugangsadresse übermittelt,
- in einer Kommunikationsphase sich der Administrator (1) über das Netzwerk mit der Kundenzugangsadresse verbindet, um mit dem Kunden zu kommunizieren,
- in einer Beendigungsphase sich die Kommunikationsschnittstelle und der Administrator (1) vom Kundenzugangspunkt trennen, und der Kundenzugangspunkt und die entsprechende Kundenzugangsadresse beim Zugangsprovider (2) gelöscht werden, wobei die vom Zugangsprovider (2) erstellte Kundenzugangsadresse nur für eine einzige Kommunikation gültig ist und bei jeder Erstellung unterschiedlich ist.

2. Verfahren nach Anspruch 1, **dadurch gekennzeichnet, dass** die Elektronikausrüstung mindestens einen Alarm erzeugen kann, und dass, wenn ein Alarm erzeugt ist, die Telefonkommunikationsschnittstelle initialisiert und sich für eine Kommunikation anzeigt, wobei die Telefonkommunikationsschnittstelle während der Anzeigephase ferner an den Administrator (1) Informationen über den Alarm übermittelt, wobei die Administratorkoordinate in der Telefonkommunikationsschnittstelle vorbestimmt ist.

3. Verfahren nach Anspruch 1 oder 2, **dadurch gekennzeichnet, dass** während der Anrufphase die Identität des Administrators (1) vom Kunden mit einer Funktion "Nummernanzeige" des Anrufes in Verbindung mit dem Läuten erhalten wird, wobei der Kunde nicht abhebt und die Leitung nicht nimmt.

4. Verfahren nach Anspruch 3, **dadurch gekennzeichnet, dass**, wenn die Funktion "Nummernanzeige" beim Anruf nicht verfügbar ist, die Identität des Administrators (1) vom Kunden durch das Senden eines Identifikationscodes auf der Leitung durch den Administrator (1) erhalten wird, wobei der Kunde abhebt und die Leitung für den Erhalt des Identifikationscodes nimmt und dann auflegt.

5. Verfahren nach einem der vorhergehenden Ansprüche, **dadurch gekennzeichnet, dass** die Telefonkommunikationsschnittstelle einen Zeitzähler (oder -abrechner) einsetzt, der in der Anzeigephase aktiviert wird, und wenn die Kommunikationsphase nach dem Zählen (oder Abrechnen) einer vorbestimmten Kommunikationswartezeit nicht eingeleitet wird, trennt sich die Telefonkommunikationsschnittstelle vom Kundenzugangspunkt.

6. Verfahren nach einem der vorhergehenden Ansprüche, **dadurch gekennzeichnet, dass** die Kundenzugangsadresse ferner nur während einer bestimmten Gültigkeitsdauer gültig ist, wobei der Kundenzugangspunkt und die Kundenzugangsadresse beim Zugangsprovider (2) nach Ablauf der Gültigkeitsdauer gelöscht werden.

7. Verfahren nach einem der vorhergehenden Ansprüche, **dadurch gekennzeichnet, dass** der Kundenzugangspunkt und die Kundenzugangsadresse beim Zugangsprovider (2) gelöscht werden, wenn sich entweder der Kunde oder der Administrator (1) trennt, nachdem er mit dem Kundenpunkt verbunden wurde.

8. Verfahren nach einem der vorhergehenden Ansprüche, **dadurch gekennzeichnet, dass** die Administratorkoordinate von dem Weg abhängt, der von der Telefonkommunikationsschnittstelle verwendet wurde, um an den Administrator (1) die Kundenzugangsadresse zu übermitteln, und dass der Weg das Netzwerk, die Administratorkoordinate eine Administratornetzwerkkoordinate ist, wobei die Übertragung der Kundenzugangsadresse durch Senden einer elektronischen Nachricht im Netzwerk erfolgt.

9. Kundentelefonkommunikationsschnittstelle zur Verbindung eines Administrators (1) mit einem Kundenelektroniksystem in einem Kommunikationsnetzwerk,
- wobei das Kundenelektroniksystem eine Elektronikausrüstung umfasst, die mit der Kundentelefonkommunikationsschnittstelle verbunden ist, wobei die Kundenkommunikationsschnittstelle ein Kundengateway (3) und ein Modem umfasst,
- wobei der Administrator (1) ein Informatikmittel mit einer Netzwerkkommunikationsschnittstelle und eine Administratorkoordinate mit einem Nachrichtensystem besitzt, das es ihm ermöglicht, elektronische Nachrichten zu erhalten,
wobei die Kundentelefonkommunikationsschnittstelle Mittel umfasst, die es ermöglichen, dass die Verbindung über einen Zugangsprovider (2) zum Kommunikationsnetzwerk erfolgt, wobei der Zugangsprovider (2) einen Zugangspunkt zum Netzwerk mit einer entsprechenden Zugangsadresse erstellen kann, wobei es der Zugangspunkt dem Kunden und dem Administrator (1) ermöglicht, miteinander zu kommunizieren, wobei der Administrator (1) ferner ein Telefonanrufmittel des Kunden besitzt, wobei die Kundentelefonkommunikationsschnittstelle ein Mittel umfasst, das den Kunden über die Identität des Telefonanrufers informiert, damit der Kunde bei einem Telefonanruf durch den Administrator (1) über die Identität des Administrators (1) informiert wird, wobei der Kunde die Administratorkoordinate in Abhängigkeit von der empfangenen Identität des Administrators bestimmt, wobei es die Administratorkoordinate der Kundentelefonkommunikationsschnittstelle ermöglicht, während einer Anzeigephase die Kundenzugangsadresse an den Administrator (1), der ihn angerufen hat, zu übertragen,
und wobei das Kundengateway (3) der Kundentelefonkommunlkationsschnittstelle ein Kommunikationsserver mit einem Betriebsprogramm ist, das es ermöglicht, dass für jede Kommunikation zwischen dem Administrator (1) und dem Kunden:
- in einer Anrufphase der Administrator (1) den Kunden anruft, wobei die Telefonkommunikationsschnittstelle des Kunden über die Identität des Administrators (1) informiert wird und die Administratorkoordinate bestimmt,
- in einer Initialisierungsphase sich die Telefonkommunikationsschnittstelle des Kunden mit dem Zugangsprovider (2) verbindet, um einen Kundenzugangspunkt und eine Kundenzugangsadresse zu erhalten,
- in einer Kundenanschlussphase sich der Kunde mit dem Kundenzugangspunkt verbindet und somit in dem Netzwerk an der Kundenzugangsadresse zugänglich wird,
- in der Anzeigephase die Telefonkommunikationsschnittstelle des Kunden an den Administrator (1) die Kundenzugangsadresse übermittelt,
- in einer Kommunikationsphase sich der Administrator (1) über das Netzwerk mit der Kundenzugangsadresse verbindet, um mit dem Kunden zu kommunizieren,
- in einer Beendigungsphase sich die Kundentelefonkommunlkationsschnittstelle und der Administrator (1) vom Kundenzugangspunkt trennen, und der Kundenzugangspunkt und die entsprechende Kundenzugangsadresse beim Zugangsprovider (2) gelöscht werden, wobei die vom Zugangsprovider (2) erstellte Kundenzugangsadresse nur für eine einzige Kommunikation gültig ist und bei jeder Erstellung unterschiedlich ist.

## Claims

1. A method for connecting an administrator (1) to a client electronic system over a communication network,
- the client electronic system including an electronic equipment linked to a phone communication interface, the phone communication interface of the client including a client gateway (3) and a modem,
- the administrator (1) having a computer means with a network communication interface with a messaging system allowing it to receive electronic messages, the administrator (1) having an administrator coordinate, wherein the connection is performed via a communication network access provider (2), the access provider (2) being able to generate a point of access to the network with a corresponding access address, said access point allowing the client and the administrator (1) to communicate with each other, the administrator further having a means for calling the client by phone, the phone communication interface of the client having a means that informs it of the identity of the phone caller so that, during a phone call by the administrator (1), the client is informed of the identity of the administrator (1), the client determining the administrator coordinate based on the administrator identity received, said administrator coordinate allowing the client phone communication interface to transmit during a signalling phase the client access address to the administrator (1) having called it,
and wherein each communication between the administrator (1) and the client:
- in a call phase, the administrator (1) calls the client, the client phone communication interface being informed of the identity of the administrator (1) and determining the administrator coordinate,
- in an initialization phase, the client phone communication interface connects to the access provider (2) to obtain a client access point and a client access address,
- in a client connection phase, the client connects to the client access point and hence becomes accessible on the network at the client access address,
- in the signalling phase, the client phone communication interface transmits the client access address to the administrator (1),
- in a communication phase, the administrator (1) connects to the client access address, via the network, to communicate with the client,
- in a termination phase, the phone communication interface and the administrator (1) disconnect from the client access point and said client access point and the corresponding client access address are deleted at the access provider (2), the client access address generated by the access provider (2) being valid for only one communication and being different at each generation.

2. The method according to claim 1, **characterized in that** the electronic equipment can generate at least one alarm and, when an alarm is generated, the phone communication interface initializes and signals itself for a communication, during the signalling phase, the phone communication interface further transmitting to the administrator (1) informations about the alarm, the administrator coordinate being predetermined in the phone communication interface.

3. The method according to claim 1 or 2, **characterized in that**, during the call phase, the identity of the administrator (1) is obtained by the client through a function of "caller number presentation" in relation with the ring, wherein the client does not hook off and does not take the line.

4. The method according to claim 3, **characterized in that**, when the function of "number presentation" is not available, during the call, the identity of the administrator (1) is obtained by the client thanks to the emission of a code of identification on the line by the administrator (1), wherein the client hooks off and takes the line for receiving the code of identification and hangs up.

5. The method according to any one of the preceding claims, **characterized in that** the phone communication interface implements a time counter (or count-down counter) that is activated at the signalling phase and when the communication phase is not started after the counting (or down-counting) of a predetermined communication waiting time, the phone communication interface disconnect from the client access point.

6. The method according to any one of the preceding claims, **characterized in that** the client access address is further valid during only a determined validity time, the client access point and the client access address being deleted at the access provider (2) after expiry of said validity time.

7. The method according to any one of the preceding claims, **characterized in that** the client access point and the client access address are deleted at the access provider (2) when either the client or the administrator (1) disconnects after having been connected to said access point.

8. The method according to any one of the preceding claims, **characterized in that** the administrator coordinate is function of the channel used by the phone communication interface to transmit the client access address to the administrator (1), and **in that** the channel is the network, the administrator coordinate is an administrator network coordinate, the transmission of the client access address being performed by the sending of an electronic message over the network.

9. A client phone communication interface for connecting an administrator (1) to a client electronic system over a communication network,
- the client electronic system including an electronic equipment linked to the client phone communication interface, the client phone communication interface including a client gateway (3) and a modem,
- the administrator (1) having a computer means with a network communication interface and an administrator coordinate with a messaging system allowing it to receive electronic messages,
the client phone communication interface including means allowing the connection to be performed via a communication network access provider (2), the access provider (2) being able to generate a point of access to the network with a corresponding access address, said access point allowing the client and the administrator (1) to communicate with each other, the administrator (1) further having a means for calling the client by phone, the client phone communication interface having a means the informs the client of the identity of the phone caller so that, during a phone call by the administrator (1), the client is informed of the identity of the administrator (1), the client determining the administrator coordinate based on the administrator identity received, said administrator coordinate allowing the client phone communication interface to transmit during a signalling phase the client access address to the administrator (1) having called it,
and the client gateway (3) of the client phone communication interface being a communication server with an operating program allowing that, for each communication between the administrator (1) and the client:
- in a call phase, the administrator (1) calls the client, the client phone communication interface being informed of the identity of the administrator (1) and determining the administrator coordinate,
- in an initialization phase, the client phone communication interface connects to the access provider (2) to obtain a client access point and a client access address,
- in a client connection phase, the client connects to the client access point and hence becomes accessible on the network at the client access address,
- in the signalling phase, the client phone communication interface transmits the client access address to the administrator (1),
- in a communication phase, the administrator (1) connects to the client access address, via the network, to communicate with the client,
- in a termination phase, the phone communication interface and the administrator (1) disconnect from the client access point and said client access point and the corresponding client access address are deleted at the access provider (2), the client access address generated by the access provider (2) being valid for only one communication and being different at each generation.
